Europäisches Patentamt

European Patent Office

Office européen des brevets

(11) Publication number: **0 135 462**
**B1**

# EUROPEAN PATENT SPECIFICATION

(45) Date of publication of patent specification: 03.05.89

(51) Int. Cl.⁴: **D 07 B 1/06, B 60 C 9/00**

(21) Application number: 84630115.8

(22) Date of filing: 10.08.84

(54) Reinforcing element for elastomeric articles and elastomeric articles made thereof.

(30) Priority: 15.08.83 US 523304

(43) Date of publication of application:
27.03.85 Bulletin 85/13

(45) Publication of the grant of the patent:
03.05.89 Bulletin 89/18

(84) Designated Contracting States:
BE DE FR GB IT LU

(56) References cited:
DE-A-2 204 746
FR-A- 698 304
FR-A-1 281 439
GB-A-2 081 763
US-A-1 774 748
US-A-3 785 423

PATENTS ABSTRACTS OF JAPAN, vol. 5, no.
25 (M-55) 697r, 14th February 1981; & JP - A -
55 152 614 (FUJI SHOJI K.K.) 28-11-1980

PATENTS ABSTRACTS OF JAPAN, vol. 2, no.
83, 6th July 1978; & JP - A - 53 51 804 (KOBE
SEIKOSHO K.K.) 05-11-1978

(73) Proprietor: THE GOODYEAR TIRE & RUBBER
COMPANY
1144 East Market Street
Akron, Ohio 44316-0001 (US)

(72) Inventor: Richards, Jimmy Lee
612 Munroe Falls Avenue
Cuyahoga Falls Ohio 44221 (US)

(74) Representative: Weyland, Joseph Jean Pierre
Goodyear Technical Center Luxembourg Patent
Department Avenue Gordon Smith
L-7750 Colmar-Berg (LU)

Courier Press, Leamington Spa, England.

# Description

This invention relates to reinforcing elements of the type described in the introductory portion of Claim 1 and elastomeric articles made thereof. Such reinforcing elements are disclosed in JA—A—152614.

Metallic cables used for reinforcing elastomeric cables have commonly had circular, or substantially circular, cross sections. The use of stacked flat wires, for example in the belt structure of a pneumatic truck tire, enables a reduction in thickness without a significant reduction in stiffness and fatigue performance. However, the spacing, between reinforcing elements is the limiting factor in substituting flat wire cables for round cables, because there must be sufficient elastomeric material between adjacent reinforcing elements to prevent them from abraiding against one another.

JA—A—152614 shows a structure for use in a tire bead core. The elongated metallic members, however, are not suitable for use in applications where they will be subjected to much bending and therefore they may be subjected to pneumatic fatigue and failure.

These problems are overcome by a reinforcing element having the features disclosed in the characterizing portion of Claim 1.

The invention will be better understood by referring to the figures of the drawing wherein:

Figure 1 is a side elevation view of a reinforcing element;

Figure 2 is a top view of the reinforcing element of Figure 1;

Figure 3 is a cross-sectional view of the reinforcing element of Figures 1 and 2 taken along line 3—3 of Figure 1;

Figure 4 is radial cross-sectional view of a pneumatic tire according to the invention; and

Figure 5 is an enlarged fragmentary view of one of the bead portions of the tire illustrated in Figure 4.

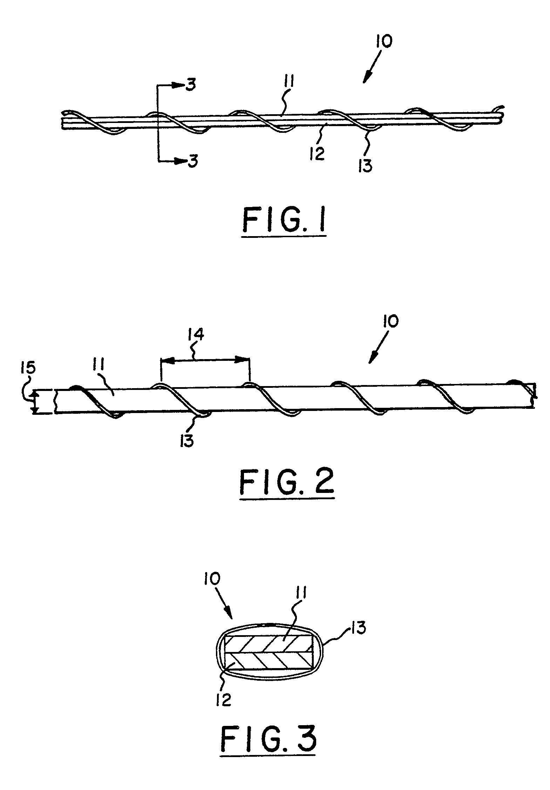

Referring to Figures 1 and 2, there are shown side and top views, respectively, of a reinforcing element 10 for an elastomeric article such as a tire, a hose, or a belt. Fig. 3 is a cross sectional view, along line 3—3 of Fig. 1. The reinforcing element comprises a plurality of elongated metallic member 11, 12 having substantially rectangular cross sections. As used herein "substantially rectangular" is understood to mean that the opposite sides of a rectangle may vary slightly from being parallel or from being the exact same length, or that part, or all, of the corners of any, or all, of the elongated metallic members may be rounded off in order to facilitate manufacturing of the reinforcing members or improve their physical characteristics in an elastomeric article. While it is considered to be preferable that the widths of each elongated metallic member, as measured for example in Fig. 2 at 15, should be identical it is not considered to be critical to the invention. Elongated metallic members of the type used in the invention are sometimes referred to in the wire art as "flat wire", and when placed juxtaposed as in the invention are sometimes referred to as "stacked".

The longitudinal axes of the elongated metallic members are parallel to one another, and a wide side of each elongated metallic member is contiguous with, that is to say in physical contact with, a wide side of another elongated metallic member. As used herein and in the claims, a "wide side" of an elongated metallic member with a rectangular cross section is one of the longer sides of the rectangle, and the smallest distance between the wide sides of the rectangle is the thickness of the elongated metallic member. While in the embodiment illustrated there are two elongated metallic members, it is understood that a reinforcing element according to the invention may comprise two or more elongated metallic members. However, testing has indicated that a reinforcing element comprising four or more elongated metallic members may be impractical for certain uses, such as reinforcing a tire, because if the reinforcing element becomes too thick it may not flex adequately in directions perpendicular to the longitudinal axes of the elongated metallic members, or the members may slip from side to side so that the reinforcing element is misshaped. The ratio of width to thickness of each elongated metallic member should be at least 2 to 1 but no greater than 10 to 1. This ratio is critical because the reinforcing element is intended primarily for applications which will result in much bending thereof, and if the elongated metallic members are too thick they may be subject to premature fatigue failure. Preferably the thickness of the elongated metallic members will be 1.0 mm. or less, more preferably .5 mm. or less, and most preferably .25 mm. or less. For example, a reinforcing element has been manufactured according to the invention using elongated metallic members having a width of 1.5 mm. and a thickness of .22 mm. Preferably the elongated metallic members have identical cross-sectional dimensions, but their widths and thicknesses may vary slightly without deviating from the scope of the invention.

A single wrap member 13 is helically disposed around the elongated metallic members 11, 12 such that each turn of the wrap member is spaced apart from the next adjacent turns of the wrap member. It is understood that the helix of the wrap member may be distorted from a perfect cylindrical helix without deviating from the scope of the invention, but that preferably each turn of the wrap member is spaced apart from the next adjacent turns, as measured at 14, in a direction parallel to the longitudinal axes of the elongated metallic members, that is at least equal to the width of one of the elongated metallic members, as measured at 15. More preferably the spacing between turns of the wrap member is at least two times the width of one of the elongated metallic members. The wrap member may comprise any suitable material such as nylon, aramid, or metal, and may be either multifilament or monofilament. The cross-sectional shape may be round, oval, rectangular or any other suitable shape. The wrap member may even comprise a fabric woven from a suitable material or a perforated strip without deviating from the scope of the invention. Preferably the wrap member is metallic and has a circular cross section with a diameter that is less than the thickness of one of the elongated metallic members. For example, tests were made on reinforcing elements manufactured according to the invention in which the elongated metallic members had a thickness of .22 mm. and a width of 1.5 mm., the wrap member comprising a single metallic filament with a diameter of .15 mm. The spacing between the turns of the wrap member is important because it has a direct effect upon the flexing and fatigue characteristics of the reinforcing element.

Table I illustrates the effect of spacing between turns of the wrap member on fatigue, as determined by a 3 roll fatigue test, for reinforcing elements comprising three elongated metallic members of 1.5 mm.×.22 mm. and a .15 mm. diameter metallic filament as a wrap member.

### TABLE I

| Spacing between turns | Cycles to failure |
| --- | --- |
| 2.0 mm | 7,280 |
| 3.5 mm | 8,522 |
| 7.0 mm | 10,015 |

Table II illustrates the effect of spacing between turns of the wrap member on Tabor stiffness, as determined per ASTM test D2969, of the reinforcing elements comprising three elongated metallic members of 1.5 mm.×.22 mm. and a .15 mm. diameter metallic filament as a wrap member.

### TABLE II

| Spacing between turns | Tabor stiffness (grams) |
| --- | --- |
| 2.0 mm | 193 |
| 3.5 mm | 124 |
| 7.0 mm | 132 |

From the test results summarized in Tables I and II, it is concluded that increased spacing between the turns of the wrap member reduces the stiffness and improves the fatigue performance of the reinforcing elements. Of course, as illustrated in Table II, the elongated metallic elements have an inherent Tabor stiffness that cannot be reduced by increasing the spacing between turns of wrap member over a certain distance.

It is believed that the physical characteristics of a reinforcing element according to the invention may be most advantageously employed by using the reinforcing elements in a pneumatic tire, but their usefulness also extends to belts, hoses and other elastomeric articles.

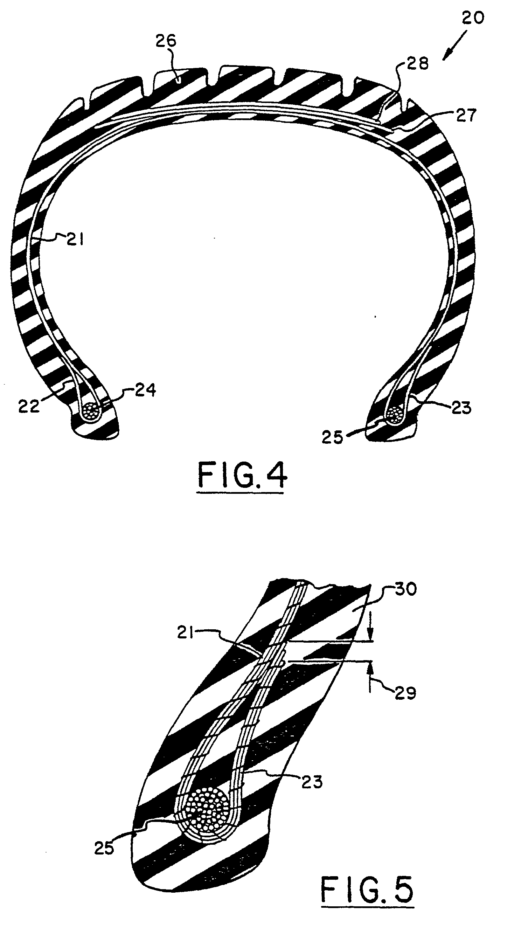

Fig. 4 is a radial cross-sectional view of a pneumatic tire 20 comprising a plurality of reinforcing elements of the type already described herein embedded in an elastomeric substance such as natural or synthetic rubber. The pneumatic tire illustrated in Fig. 4 is a radial tire, but it is understood that a pneumatic tire with reinforcing elements according to the invention may be of the radial, bias, or bias-belted types without deviating from the scope of the invention. As used herein a radial tire is understood to mean a tire in which the parallel reinforcing elements of the carcass ply 21 are disposed at an angle of between 75 and 90 degrees with respect to the mid-circumferential plane of the tire. The carcass ply 21 has a pair of axial edge portions 22, 23 and each axial edge portion is anchored around an annular bead 24, 25. As used herein "axial" and "axially" refer to directions parallel to the axis of rotation of a tire, and "radial" and "radially" refer to directions perpendicular to the axis of rotation of a tire.

The pneumatic tire 20 of Fig. 4 has a ground engaging tread portion 26 extending circumferentially thereabout, and a plurality of circumferentially extending tread reinforcing plies 27, 28 disposed radially inwardly of the ground engaging tread portion. While the tire illustrated in Fig. 4 has a plurality of tread reinforcing plies, it is understood that a pneumatic tire according to the invention may comprise only a single tread reinforcing ply, or more than two tread reinforcing plies without deviating from the scope of the invention. The tread reinforcing ply, or plies, may comprise a plurality of parallel reinforcing elements of the type described herein. In a radial tire a bead reinforcing ply is commonly referred to as a belt ply, which is understood to mean that the reinforcing elements of the tread reinforcing ply are disposed at a significantly lower angle with respect to the mid-circumferential plane of the tire than the reinforcing elements of the carcass ply.

It is understood that in a pneumatic tire according to the invention comprising a plurality of reinforcing elements of the type disclosed herein embedded in an elastomeric substance, either the carcass ply alone, or a tread reinforcing ply alone, or both the carcass ply and at least one tread reinforcing ply may comprise a plurality of said herein disclosed reinforcing elements. Of course, any other reinforcing component of a pneumatic tire, such as a sidewall reinforcement, or bead area reinforcement comprising a plurality of said herein disclosed reinforcing elements also is understood to be within the broad scope of the invention even if neither the carcass ply or the tread reinforcing ply comprises said herein disclosed reinforcing elements.

By referring to Fig. 5, which is an enlarged fragmentary view of one of the bead portions of the tire 20 illustrated in Fig. 4, another advantage of the invention may be pointed out. In all embodiments of a pneumatic tire according to the invention the wide sides of the elongated metallic members, also referred to as flat wire in the art, are oriented facing the internal cavity of the tire and external surfaces of the tire respectively, while the thin sides of adjacent reinforcing elements are oriented facing one another, regardless of whether the reinforcing elements comprise the carcass ply, tread reinforcing ply, or any other component. This orientation makes the best use of the bending and flexing characteristics of the reinforcing elements. When the carcass of a radial pneumatic tire is expanded from a substantially cylindrical shape to a toroidal-like shape during the manufacturing process the distance from the axial edge of the carcass ply to the top of the bead core changes. In reinforcing elements of the type disclosed herein are used in the carcass ply, a natural step-down 29 occurs at the edge of the carcass ply due to the radius of the reinforcing element around the annular bead increasing by the thickness of the elongated metallic members and the freedom of the elongated metallic members to move with respect to their longitudinal axes in the reinforcing element. If, for example, the reinforcing element comprises three elongated metallic members, the stresses at the end of the reinforcing element will be dissipated over a larger area to decrease the likelihood of failure of the tire structure at this location, and to increase the area of the interface between the reinforcing element and the surrounding elastomeric material 30.

The flex and stiffness characteristics of the reinforcing elements for the various tire components may be selected by a tire engineer in accordance with good engineering practice, and the width to thickness ratio of the elongated metallic members and the spacing between turns of the wrap member selected accordingly.

The reinforcing elements may be embedded in an elastomeric substance by creel calendering, in a manner that is well known in the tire manufacturing technology.

Elastomeric articles, that is to say articles comprised primarily of elastomeric substances such as natural or synthetic rubber, other than tires that are reinforced with reinforcing elements of the types disclosed herein are also considered to be within the scope of the present invention. Such articles include, but are not limited to, hoses and belts.

## Claims

1. A reinforcing element (10) for an elastomeric article comprising a plurality of elongated metallic members (11, 12) having substantially rectangular cross sections of identical width, the longitudinal axes of said elongated metallic members being parallel to one another, and comprising a wrap member (13) helically disposed around said elongated metallic members, characterized in that each said elongated metallic member is contiguous with another said elongated metallic member only along its wide side, the ratio of width to thickness of each said elongated metallic member being at least 2 to 1 but no greater than 10 to 1, and in that the wrap member (13) is helically disposed around said elongated metallic members such that each turn of said wrap member is spaced apart from the next adjacent turns of said wrap member by a distance, as measured in a direction parallel to the longitudinal axes of said elongated metallic members, (11, 12) that is at least equal to the width of one of said elongated metallic members.

2. A reinforcing element for an elastomeric article according to Claim 1 further characterized by each said elongated metallic member (11, 12) having a thickness of 1.0 mm or less.

3. A reinforcing element for an elastomeric article according to Claim 1 further characterized by each said elongated metallic member (11, 12) having a thickness of .5 mm or less.

4. A reinforcing element for an elastomeric article according to Claim 1 further characterized by each said elongated metallic member (11, 12) having a thickness of .25 mm or less.

5. A reinforcing element for an elastomeric article according to any of the preceding claims further characterized by said elongated metallic members (11, 12) having identical cross-sectional dimensions.

6. A reinforcing element for an elastomeric article according to any of the preceding claims further characterized by said wrap member (13) being metallic.

7. A reinforcing element for an elastomeric article according to any of the preceding claims further characterized by each turn of said wrap member (13) being spaced apart from the next adjacent turns a distance, as measured in a direction parallel to the longitudinal axes of said elongated metallic members, (11, 12) that is at least two times the width of one of said elongated metallic members.

8. A reinforcing element for an elastomeric article according to any of the preceding claims further characterized by said metallic wrap member (13) having a circular cross section with a diameter that is less than the thickness of one of said elongated metallic members (11, 12).

9. An elastomeric article (20) characterized by a plurality of reinforcing elements (10) according to any of the preceding claims embedded in an elastomeric substance.

10. An elastomeric article (20) according to Claim 9 further characterized by said elastomeric article being a pneumatic tire.

11. An elastomeric article according to Claim 10 further characterized by the wide sides of said elongated metallic members being oriented facing an internal cavity of the tire and external surfaces of the tire while the thin sides of adjacent reinforcing elements are oriented facing one another.

12. An elastomeric article according to Claims 10 or 11 further characterized by said elastomeric article being a radial pneumatic tire having a carcass ply (21) comprising said plurality of reinforcing elements (10).

13. An elastomeric article according to Claims 10, 11 or 12 further characterized by a circumferentially extending belt ply (27 or 28) disposed radially outwardly of said carcass ply (21), said ply comprising said plurality of reinforcing elements (10).

**Patentansprüche**

1. Verstärkungselement (10) für einen elastomeren Gegenstand, mit einer Vielzahl von langgestreckten metallischen Elementen (11, 12) mit im wesentlichen rechteckigen Querschnitten identischer Breite, wobei die Längsachsen der langgestreckten metallischen Elemente parallel zueinander sind und mit einem Umhüllungselement 13, das spiralförmig um die langgestreckten metallischen Elemente angeordnet ist, dadurch gekennzeichnet, daß jedes langgestreckte metallische Element mit einem anderen langgestreckten metallischen Element nur längs der breiten Seite aneinanderliegt, daß das Verhältnis der Breite zur Dicke jedes langgestreckten metallischen Elementes wenigstens 2:1 aber nicht größer als 10:1 ist, und daß das Wickelelement (13) spiralförmig um die langgestreckten metallischen Elemente derart angeordnet ist, daß jede Windung des Wickelelementes von den nächsten benachbarten Windungen des Wickelelementes gemessen in Richtung parallel zu den Längsachsen der langgestreckten metallischen Elemente (11, 12) einen Abstand aufweist, der wenigstens gleich ist der Breite eines der langgestreckten metallischen Elemente.

2. Verstärkungselement für einen elastomeren Gegenstand nach Anspruch 1, dadurch gekennzeichnet, daß jedes langgestreckte metallische Element (11, 12) eine Dicke von 1,0 mm oder weniger aufweist.

3. Verstärkungselement für einen elastomeren Gegenstand nach Anspruch 1, dadurch gekennzeichnet, daß jedes langgestreckte metallische Element (11, 12) eine Dicke von 0,5 mm oder weniger aufweist.

4. Verstärkungselement für einen elastomeren Gegenstand nach Anspruch 1, dadurch gekennzeichnet, daß jedes langgestreckte metallische Element (11, 12) eine Dicke von 0,25 mm oder weniger aufweist.

5. Verstärkungselement für einen elastomeren Gegenstand nach einem der vorhergehenden Ansprüche, dadurch gekennzeichnet, daß die langgestreckten metallischen Elemente (11, 12) identische Querschnittsabmessungen aufweisen.

6. Verstärkungselement für einen elastomeren Gegenstand nach einem der vorhergehenden Ansprüche, dadurch gekennzeichnet, daß das Wickelelement (13) aus Metall besteht.

7. Verstärkungselement für einen elastomeren Gegenstand nach einem der vorhergehenden Ansprüche, dadurch gekennzeichnet, daß jede Windung des Wickelelementes (13) einen Abstand von den nächsten benachbarten Windungen gemessen in einer Richtung parallel zu den Längsachsen der langgestreckten metallischen Elemente (11, 12) aufweist, der wenigstens zweimal der Breite eines der langgestreckten metallischen Elemente entspricht.

8. Verstärkungselement für einen elastomeren Gegenstand nach einem der vorhergehenden Ansprüche, dadurch gekennzeichnet, daß das metallische Wickelelement (13) einen kreisförmigen Querschnitt mit einem Durchmesser aufweist, der geringer ist als die Dicke eines der langgestreckten metallischen Elemente (11, 12).

9. Elastomerer Gegenstand (20), gekennzeichnet durch eine Vielzahl von Verstärkungselementen (10) nach einem der vorhergehenden Ansprüche eingebettet in eine elastomere Substanz.

10. Elastomerer Gegenstand (20) nach Anspruch 9, dadurch gekennzeichnet, daß der elastomere Gegenstand ein Luftreifen ist.

11. Elastomerer Gegenstand nach Anspruch 10, dadurch gekennzeichnet, daß die breiten Seiten der langgestreckten metallischen Elemente derart ausgerichtet sind, daß sie zu dem inneren Hohlraum des Reifens und zu den Außenflächen des Reifens gerichtet sind, während die dünnen Seiten benachbarter Verstärkungselemente zueinander hin gerichtet sind.

12. Elastomerer Gegenstand nach Anspruch 10 oder 11, dadurch gekennzeichnet, daß der elastomere Gegenstand ein Gürtelreifen mit einer Karkasseneinlage (21) bestehend aus der Vielzahl der Verstärkungselemente (10) ist.

13. Elastomerer Gegenstand nach Anspruch 10, 11 oder 12, dadurch gekennzeichnet, daß eine sich in Umfangsrichtung sich erstreckende Gurtlage (27, 28) radial außerhalb der Karkasseneinlage (21) angeordnet ist und daß die Lage die Vielzahl der Verstärkungselemente (10) aufweist.

**Revendications**

1. Elément d'armature (10) destiné à un article élastomère, comprenant plusieurs organes métalliques allongés (11, 12) ayant des sections sensiblement rectangulaires de même largeur, les axes longitudinaux des organes métalliques allongés étant parallèles les uns aux autres, et un organe vrillé (13) disposé en hélice autour des organes métalliques allongés, caractérisé en ce que chaque organe métallique allongé est contigu à un autre organe métallique allongé uniquement par sa grande face, le rapport de la largeur à l'épaisseur de chaque organe métallique étant au moins égal à 2/1 mais ne dépassant pas 10/1, et en ce que l'organe vrillé (13) est disposé en hélice autour des organes métalliques allongés de manière que chaque spire de l'organe vrillé soit séparée des spires adjacentes de l'organe vrillé par une distance, mesurée en direction parallèle aux axes longitudinaux des organes métalliques allongés (11, 12), qui est au moins égale à la largeur de l'un des organes métalliques allongés.

2. Elément d'armature pour article élastomère selon la revendication 1, caractérisé en outre en ce que chaque organe métallique allongé (11, 12) a une épaisseur inférieure ou égale à 1,0 mm.

3. Eléments d'armature pour article élastomère selon la revendication 1, caractérisé en outre en ce que chaque organe métallique allongé (11, 12) a une épaisseur inférieure ou égale à 0,5 mm.

4. Elément d'armature pour article élastomère selon la revendication 1, caractérisé en outre en ce que chaque organe métallique allongé (11, 12) a une épaisseur inférieure ou égale à 0,25 mm.

5. Elément d'armature pour article élastomère selon l'une quelconque des revendications précédentes, caractérisé en outre en ce que les organes métalliques allongés (11, 12) ont des dimensions identiques en coupe.

6. Elément d'armature pour article élastomère selon l'une quelconque des revendications précédentes, caractérisé en outre en ce que l'organe vrillé (13) est métallique.

7. Elément d'armature pour article élastomère selon l'une quelconque des revendications précédentes, caractérisé en outre en ce que chaque spire de l'organe vrillé (13) est séparée des spires adjacentes par une distance, mesurée en direction parallèle aux axes longitudinaux des organes métalliques allongés (11, 12), qui est au moins égale au double de la largeur de l'un des organes métalliques allongés.

8. Eléments d'armature pour article élastomère selon l'une quelconque des revendications précédentes, caractérisé en outre en ce que l'organe métallique vrillé (13) a une section circulaire dont le diamètre est inférieur à l'épaisseur de l'un des organes métalliques allongés (11, 12).

9. Article élastomère (20) caractérisé par plusieurs éléments d'armature (10) selon l'une quelconque des revendications précédentes, enrobés dans une substance élastomère.

10. Article élastomère (20) selon la revendication 9, caractérisé en outre en ce que l'article élastomère est un pneumatique.

11. Article élastomère selon la revendication 10, caractérisé en outre en ce que les grandes faces des organes métalliques allongés sont orientées vers la cavité interne du pneumatique et les surfaces externes du pneumatique alors que les petits côtés des organes allongés d'armature adjacente sont tournés les uns vers les autres.

12. Article élastomère selon la revendication 10 ou 11, caractérisé en outre en ce que l'article élastomère est un pneumatique radial ayant une nappe de carcasse (21) comportant plusieurs éléments d'armature (10).

13. Article élastomère selon la revendication 10, 11 ou 12, caractérisé en outre par une nappe circonférentielle de ceinture (27 ou 28) disposée radialement vers l'extérieur de la nappe de carcasse (21), la nappe ayant plusieurs éléments d'armature (10).

FIG. 1

FIG. 2

FIG. 3

1

FIG.4

FIG.5